(19)

Europäisches
Patentamt

European
Patent Office

Office européen
des brevets

(11) **EP 4 434 846 A1**

(12) **EUROPEAN PATENT APPLICATION**
published in accordance with Art. 153(4) EPC

(43) Date of publication:
**25.09.2024 Bulletin 2024/39**

(21) Application number: **22895693.4**

(22) Date of filing: **18.11.2022**

(51) International Patent Classification (IPC):
***B61L 23/04*** (2006.01)     ***G01N 21/88*** (2006.01)
***G06T 7/00*** (2017.01)

(52) Cooperative Patent Classification (CPC):
**B61L 23/04; G01N 21/88; G06T 7/00**

(86) International application number:
**PCT/JP2022/042799**

(87) International publication number:
**WO 2023/090412 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.11.2021 JP 2021188701**

(71) Applicants:
• **Meidensha Corporation**
  **Tokyo 141-6029 (JP)**

• **Railway Technical Research Institute**
  **Kokubunji-shi, Tokyo 185-8540 (JP)**

(72) Inventors:
• **MOCHIZUKI, Rinpei**
  **Tokyo 141-6029 (JP)**
• **NOTA, Yoshiki**
  **Tokyo 141-6029 (JP)**
• **MATSUMURA, Itaru**
  **Kokubunji-shi, Tokyo 185-8540 (JP)**

(74) Representative: **Murgitroyd & Company**
**165-169 Scotland Street**
**Glasgow G5 8PL (GB)**

(54) **DEVICE AND METHOD FOR DETECTING ANOMALIES IN OVERHEAD WIRE METAL FITTINGS**

(57)     By incorporating a semi-supervised anomaly detection method using normal data and a small amount of anomaly data, a device for detecting anomalies in overhead contact line fittings and a method for detecting anomalies in overhead contact line fittings are provided that effectively utilize a small amount of anomaly data acquired in actual operations. Provided are a camera 3 that is mounted on the roof of a vehicle 2; a storage device 5 that stores image data output from the camera 3; a learning processing unit 9 that learns an anomaly detection model by semi-supervised anomaly detection learning using one-hot expression index image data that are obtained by converting the image data; and a data processing unit 7 that performs anomaly determinations by using the anomaly detection model.

Fig. 1

EP 4 434 846 A1

## Description

### TECHNICAL FIELD

The present invention relates to a device for detecting anomalies in overhead contact line fittings and a method for detecting anomalies in overhead contact line fittings.

### BACKGROUND

In order to inspect overhead contact line equipment for electric railway, a camera is mounted on a vehicle to capture images of the overhead contact line equipment, and the captured images are analyzed to detect anomalies.

One method of image analysis is to create an anomaly detection model by machine learning and using this anomaly detection model to detect anomalies. As a machine learning method, for example, a method called DEEP SAD as shown in Non-Patent Document 1 is disclosed. In addition, Patent Document 1, which is an example of the conventional technology, discloses generating an image using a generative model such as a neural network, determining the difference between the generated image and a captured image, and determining an anomaly when this difference is large.

### RELATED ART

### NON-PATENT LITERATURE

Non-patent Document 1: Lukas Ruff, Robert A. Vandermeulen, Nico Gornitz, Alexander Binder, Emmanuel Muller, Klaus-Robert Muller, Marius Kloft, "Deep Semi-Supervised Anomaly Detection", International Conference on Learning Representations 2020(ICLR2020)

### PATENT LITERATURE

Patent Document 1: JP 2019-133306 A

### SUMMARY OF INVENTION

### TECHNICAL PROBLEM

In the anomaly determination described in Patent Document 1, an anomaly is determined based on the difference between the input image and the generated image of an image generator that has been trained using only normal data. However, there is the problem that, with respect to an anomaly having a small difference from the normal data, anomaly detection is difficult. Anomaly detection methods using deep learning include supervised anomaly detection, semi-supervised anomaly detection, and unsupervised anomaly detection, but the challenges of supervised anomaly detection and unsupervised anomaly detection are shown below. In this specification, a method of learning using only normal data is expressed as unsupervised learning.

<Supervised learning>

There are rare opportunities in which it is possible to obtain anomaly data during railway equipment inspections, and most of the data that can be obtained are normal data, making it difficult to use supervised learning that requires both normal data and anomaly data. Even if supervised learning is performed, if the ratio of the normal data to the amount of anomaly data is not balanced, mainly normal data will be learned, and anomaly detection will often not function. In addition, all data to be learned must be labeled, which is very costly.

<Unsupervised learning>

In unsupervised learning, learning is performed using only normal data, and data that deviate from a normal state or normal data distribution are determined to be anomalies. However, since there are anomaly data with slight distortions and normal data that appear to be anomalies depending on the viewing angle, it may be difficult to identify data near the boundary between normal and anomaly. Solving these problems by adding or changing learning data may also be difficult because there is no indicator of normality and anomaly. In the case of unsupervised learning, it may not be able to identify data that can be identified as anomalies by humans.

The present invention has been made in view of the above-mentioned circumstances, and the problem to be solved by the present invention is to incorporate a semi-supervised anomaly detection method using normal data and a small amount of anomaly data to provide a device for detecting anomalies in overhead contact line fittings and a method for detecting anomalies in overhead contact line fittings that effectively utilize a small amount of anomaly data acquired in actual operations.

**SOLUTION TO PROBLEM**

The present invention adopts the following means to solve the abovementioned problem. A device for detecting anomalies in overhead contact line fittings of the present invention is provided with: a camera that is mounted on the roof of a vehicle; a storage device that stores image data output from the camera; a learning processing unit that learns an anomaly detection model by semi-supervised anomaly detection learning using one-hot expression index image data that are obtained by converting the image data; and a data processing unit that performs anomaly determinations by using the anomaly detection model. According to the present invention, learning of the anomaly detection model by using semi-supervised anomaly detection learning is performed, so the acquired image data can be effectively used to learn a model, and the model can be used to detect anomalies in overhead contact line fittings.

According to one embodiment of the present invention, the learning processing unit is provided with: an overhead contact line fittings detection unit that detects overhead contact line fittings from the image data; a segmentation unit that performs semantic segmentation on the image data of the detected overhead contact line fittings and that converts the image data into one-hot expression index image data; a learning selection unit that selects any of unsupervised anomaly detection learning, semi-supervised anomaly detection learning, and supervised anomaly detection learning on the basis of the amount of anomaly data in image data provided for model learning; an unsupervised learning unit that performs unsupervised anomaly detection learning; a semi-supervised learning unit that performs semi-supervised anomaly detection learning; and a supervised learning unit that performs supervised anomaly detection learning. In the present embodiment, since any of unsupervised anomaly detection learning, semi-supervised anomaly detection learning, and supervised anomaly detection learning is selected on the basis of the amount of anomaly data in image data provided for model learning, an appropriate learning method can be selected in accordance with the types of acquired image data.

In one embodiment of the present invention, instead of performing the semantic segmentation by the segmentation unit, an annotation image used when learning a segmentation model for performing the semantic segmentation is used. In this embodiment, an annotation image is used instead of performing the semantic segmentation, so it is possible to efficiently perform model learning.

The method for detecting anomalies in overhead contact line fittings of the present invention includes: capturing images with a camera that is mounted on the roof of a vehicle; storing image data captured with the camera; learning an anomaly detection model by semi-supervised anomaly detection learning using one-hot expression index image data that are obtained by converting the image data; and performing anomaly determinations by using the anomaly detection model. According to the present invention, since the anomaly detection model is learned by semi-supervised anomaly detection learning, the acquired image data are effectively utilized to perform model learning, and by utilizing said model, it is possible to detect anomalies in the overhead contact line fittings.

In one embodiment of the present invention, the learning content of the anomaly detection model includes: detecting overhead contact line fittings from the image data; performing semantic segmentation on the image data of the detected overhead contact line fittings to convert the image data into one-hot expression index image data; and performing learning by selecting any of unsupervised anomaly detection learning, semi-supervised anomaly detection learning, and supervised anomaly detection learning on the basis of the amount of anomaly data in the image data provided for model learning. In this embodiment, since any of unsupervised anomaly detection learning, semi-supervised anomaly detection learning, and supervised anomaly detection learning is selected on the basis of the amount of anomaly data of the image data provided for model learning, an appropriate learning method can be selected in accordance with the type of acquired image data.

In one embodiment of the present invention, instead of performing the semantic segmentation, an annotation image is supplied that is used when learning a segmentation model for performing the semantic segmentation. In this embodiment, an annotation image is used instead of performing the semantic segmentation, so it is possible to efficiently perform model learning.

**EFFECTS OF INVENTION**

According to the present invention, by incorporating a semi-supervised anomaly detection method using normal data and a small amount of anomaly data, it is possible to provide a device for detecting anomalies in overhead contact line fittings and a method for detecting anomalies in overhead contact line fittings that effectively utilize a small amount of anomaly data acquired in actual operations.

**BRIEF DESCRIPTION OF DRAWINGS**

Fig. 1 is diagram showing an example of installation of a device for detecting anomalies in overhead contact line fittings according to an embodiment of the present invention.

Fig. 2 is a block diagram showing the structure of the device for detecting anomalies in overhead contact line fittings according to an embodiment of the present invention.

Fig. 3 is a flow chart showing an anomaly detection process using a learned anomaly detection model according to an embodiment of the present invention.

Fig. 4 is a diagram showing 256-gradation, 3-channel RGB image data before being converted by the segmentation unit according to an embodiment of the present invention.

Fig. 5 is a diagram showing one-hot expression index image data converted by a segmentation unit according to an embodiment of the present invention.

Fig. 6 is a flowchart illustrating learning processing of an anomaly detection model according to an embodiment of the present invention.

Fig. 7 is diagram illustrating the concept of an anomaly detection method according to an embodiment of the present invention.

Fig. 8 is a flowchart illustrating learning processing of an anomaly detection model according to an embodiment of the present invention.

**DESCRIPTION OF EMBODIMENTS**

Below, with reference to the drawings, embodiments for practicing the present invention are explained.

(Embodiment 1)

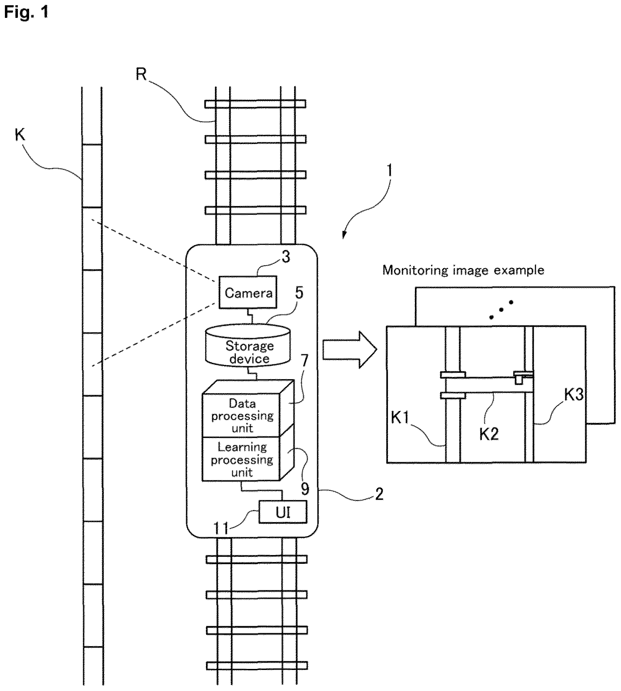

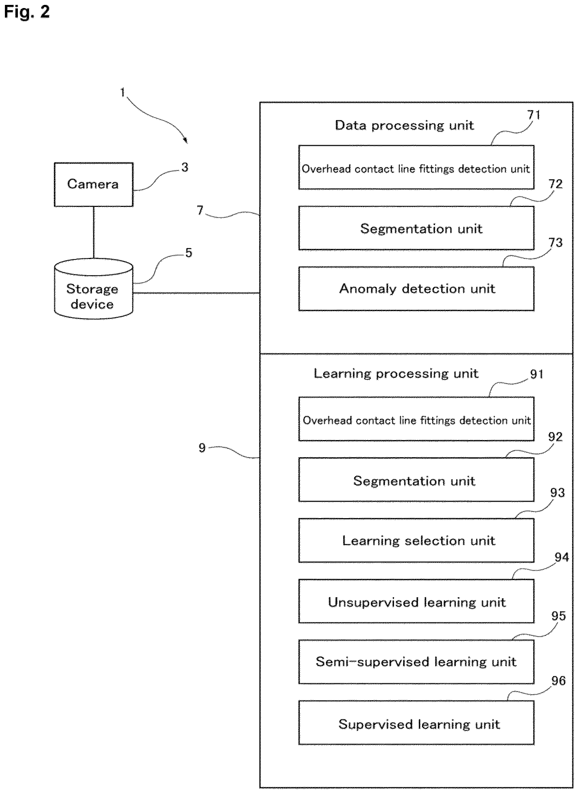

Fig. 1 is diagram showing an example of installation of a device for detecting anomalies in overhead contact line fittings according to an embodiment of the present invention. Fig. 2 is a block diagram showing the structure of the device for detecting anomalies in overhead contact line fittings according to an embodiment. As shown in Fig. 1, the device 1 for detecting anomalies in overhead contact line fittings according to the present embodiment is installed on the vehicle 2 travelling on the rail R and is used in anomaly detection of overhead contact line K. As one example, the overhead contact line K may include a messenger wire K1 and a contact wire K3 suspended from the messenger wire K1 by a dropper K2. The device 1 for detecting anomalies in overhead contact line fittings is provided with: a camera 3 that is mounted on the roof of the vehicle 2; a storage device 5 that stores image data output from the camera 3; a learning processing unit 9 that learns an anomaly detection model by semi-supervised anomaly detection learning using one-hot expression index image data that are obtained by converting the image data; a data processing unit 7 that performs anomaly determinations by using the anomaly detection model; and a user interface (UI) unit 11 that inputs/outputs settings and detection results of the device 1 for detecting anomalies in overhead contact line fittings.

The camera 3, for example, may use an area sensor camera or a line sensor camera. While lighting and the like may be used as needed, what is required is a means to capture images of the linear overhead contact line fittings, as shown in the monitoring image example shown in Fig. 1, and the configuration thereof does not matter. The storage device 5 can be configured with, for example, a hard disk (HDD) or a solid state drive (SSD). The data processing unit 7 and the learning processing unit 9 may be configured by hardware, or each function may be realized by software. The data processing unit 7 and the learning processing unit 9 are, for example, information processing devices such as personal computers. Each of the functional blocks described below may be software or a program executed by a CPU or GPU in the information processing device. In addition, the data processing unit 7 and the learning processing unit 9 may be software or programs provided on a cloud service. The UI unit 11 may include, for example, a keyboard, a mouse, a touch panel, a display, etc. that perform input/output to a personal computer.

As illustrated in Fig. 2, the data processing unit 7 is provided with: an overhead contact line fittings detection unit 71 that detects overhead contact line fittings from the image data captured by the camera 3; a segmentation unit 72 that performs semantic segmentation on the image data of the detected overhead contact line fittings and that converts the image data to one-hot expression index image data; and an anomaly detection unit 73 that detects anomalies of the overhead contact line fittings with an anomaly detection model obtained by anomaly detection learning.

The learning processing unit 9 is provided with: an overhead contact line fittings detection unit 91 that detects overhead contact line fittings from the image data; a segmentation unit 92 that performs semantic segmentation on the image data of the detected overhead contact line fittings and that converts the image data into one-hot expression index image data; a learning selection unit 93 that selects any of unsupervised anomaly detection learning, semi-supervised anomaly detection learning, and supervised anomaly detection learning on the basis of the amount of anomaly data in image data provided for model learning; an unsupervised learning unit 94 that performs unsupervised anomaly detection learning; a semi-supervised learning unit 95 that performs semi-supervised anomaly detection learning; and a supervised learning unit 96 that performs supervised anomaly detection learning.

The overhead contact line fittings detection unit 71 of the data processing unit 7 and the overhead contact line fittings detection unit 91 of the learning processing unit 9 may be the same library executed on a CPU. The segmentation unit 72 of the data processing unit 7 and the segmentation unit 92 of the learning processing unit 9 may be the same library executed on a CPU.

<Overhead contact line fittings anomaly detection>

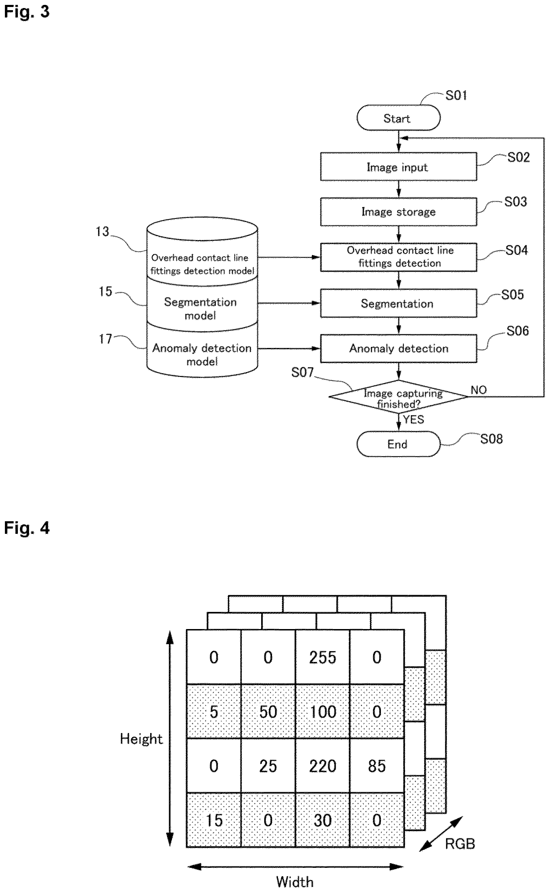

Fig. 3 is a flow chart showing an anomaly detection process using a learned anomaly detection model 17 performed in the data processing unit 7. With reference to this drawing, the operation of the anomaly detection in the present embodiment is explained. The anomaly detection process is performed in the data processing unit 7 in Fig. 2. When the anomaly detection process is started (S01), the camera 3 mounted on the vehicle continuously captures images of the overhead contact line K (S02). The captured images are sent to the storage device 5 and stored as image data (S03). The stored image data are sent to the overhead contact line fittings detection unit 71 of the data processing unit 7, and an overhead contact line fittings detection model 13 called from the storage device 5 is used to detect and extract overhead contact line fittings that are the target of equipment inspection from the captured image data (S04). Any method may be used to detect the overhead contact line fittings. Examples of detection methods include simple image processing, pattern matching, and deep learning object detection methods.

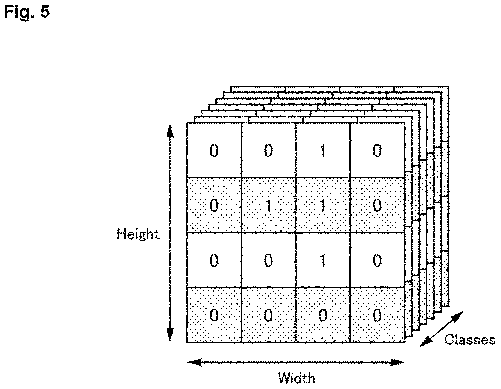

The image data of the overhead contact line fittings detected and extracted at the overhead contact line fittings detection unit 71 are next sent to the segmentation unit 72. At the segmentation unit 72, a segmentation model 15 learned in advance and stored in the storage device 5 is used, and semantic segmentation is performed on the extracted overhead contact line fittings images (S05). Fig. 4 is RGB image data before performing the semantic segmentation. The RGB image data have quantitative data of [0 to 255] in each of the three RGB channels. Fig. 5 shows index image data after performing semantic segmentation. The index image data have index values as quantitative data of [0, 1] in each of the multiple classes. By performing semantic segmentation in this way, the image shown in Fig. 4 is expressed as one-hot and converted into the one-hot expression index image data shown in Fig. 5, thereby reducing the search space and the learning difficulty in anomaly detection.

The image data subjected to semantic segmentation are sent to the anomaly detection unit 73. The anomaly detection unit 73 performs anomaly detection using the anomaly detection model 17 learned based on a learning flowchart to be described later and stored in the storage device 5 (S06). Next, a check is made to see whether or not the image capturing has ended (S07), and if the image capturing continues, the camera continues capturing images (S07: NO), and if the image capturing has ended (S07: YES), the process is ended (S08).

<Learning the anomaly detection model>

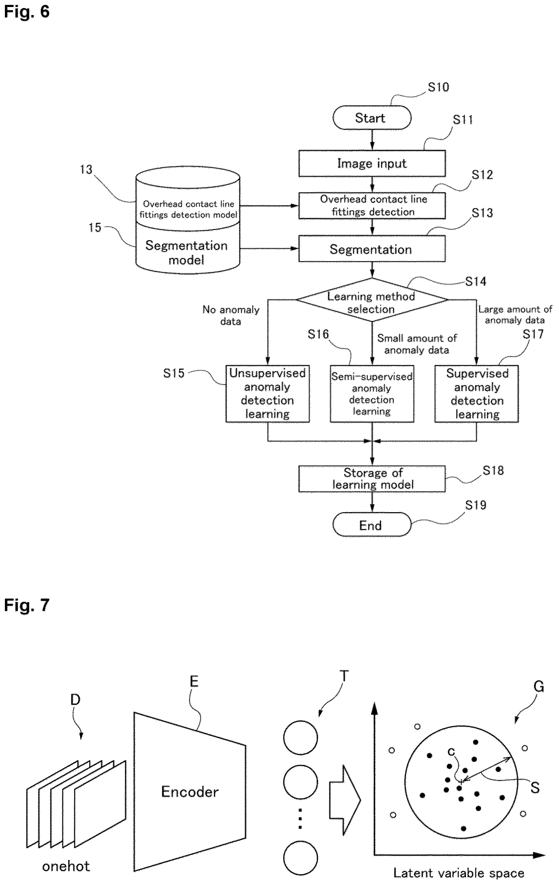

Fig. 6 is a flowchart illustrating learning processing of an anomaly detection model performed in the learning processing unit 9. With reference to this drawing, learning the anomaly detection model in the present embodiment is explained. The overhead contact line fittings detection model 13 and the segmentation model 15 used here may use the same as the models used in the anomaly detection in Fig. 3. Learning the anomaly detection model is performed in the learning processing unit 9 in Fig 2. When learning the anomaly detection model is started (S10), image data prepared for learning are sent to the overhead contact line fittings detection unit 91 of the learning processing unit 9 from the storage device 5 (S11).

The overhead contact line fittings detection unit 91 performs a process of detecting and extracting overhead contact line fittings that are the target of equipment inspection from the received image data using the overhead contact line fittings detection model 13 (S12). The overhead contact line fittings detection process here may be the same process as the overhead contact line fittings detection (S04) in Fig. 3, and may be prepared as a library executed by the CPU as described above. The image data for which the overhead contact line fittings detection process has been completed at the overhead contact line fittings detection unit 91 are sent to the segmentation unit 92.

The segmentation unit 92 performs semantic segmentation on the extracted overhead contact line fittings images using the segmentation model 15 learned in advance (S13). The semantic segmentation process here may be the same process as the segmentation (S05) in Fig. 3, and may be prepared as a library executed by the CPU as described above. The image data subjected to semantic segmentation in the segmentation unit 92 are sent to the learning selection unit 93.

The learning selection unit 93 receives the sent image data and after accumulating predetermined learning image data, checks whether or not there is an index of anomaly data as teacher data for these image data. The learning selection unit 93 selects a learning method for the anomaly detection model based on the amount of confirmed anomaly data (S14). Here, an index (flag) of anomaly data or normal data is attached to arbitrary image data after overhead contact line fittings detection (S12).

If there are no anomaly data, the image data that have been processed and accumulated so far are sent to the unsupervised learning unit 94, where unsupervised anomaly detection learning is performed (S15). If the amount of anomaly data is less than a predetermined threshold, the image data are sent to the semi-supervised learning unit 95, where semi-supervised anomaly detection learning is performed (S16). If the amount of anomaly data is a predetermined threshold anomaly, the image data are sent to the supervised learning unit 96, and supervised anomaly detection learning is performed (S17).

Here, examples of unsupervised anomaly detection learning methods include Variational Autoencoder (VAE) and Anomaly Generative Adversarial Network (AnoGAN). Examples of semi-supervised anomaly detection learning methods include Deep Semi-supervised Anomaly Detection (Deep SAD) and Fully Convolutional Data Description (FCDD), which will be described later. Examples of supervised anomaly detection learning methods include two-class classification using Support Vector Machine (SVM) and Convolutional Neural Networks (CNNs) such as ResNet.

The anomaly detection model generated by performing a model learning process with any of the unsupervised learning unit 94, the semi-supervised learning unit 95, and the supervised learning unit 96 is stored in the storage device 5 (S18), and the learning process of a series of anomaly detection models is ended (S19).

<Semi-supervised anomaly detection learning>

In the semi-supervised anomaly detection learning in this embodiment, learning is performed on one-hot expression index image data converted into one-hot expression. The semi-supervised learning method used here may be any method as long as it can use normal data and a small amount of anomaly data. Here, a case will be described in which the semi-supervised anomaly detection method Deep Semi-supervised Anomaly Detection (Deep SAD) described in Non-Patent Document 1 is used.

Fig. 7 is a conceptual diagram showing the structure of model learning in Deep SAD. In Deep SAD learning, a feature amount T is extracted from the input one-hot expression index image data D converted to a one-hot expression using an encoder (E), and distance learning is performed on the latent variable space G using the result of this feature extraction. Deep SAD learning is performed by minimizing the objective function shown in [Equation 1] below.

Equation 1

$$\min_{\mathcal{W}} \frac{1}{n+m} \sum_{i=1}^{n} \|\phi(x_i; \mathcal{W}) - c\|^2 + \frac{\eta}{n+m} \sum_{j=1}^{m} \left( \|\phi(\tilde{x}_j; \mathcal{W}) - c\|^2 \right)^{\tilde{y}_j} + \frac{\lambda}{2} \sum_{l=1}^{L} \|W^l\|_F^2$$

Here, x is the input data, y is the label information of normal = 1 or anomaly = -1, n is the data number of unlabeled data, m is the data number of labeled data, $\eta$ is a hyperparameter that weights the learning of labeled data and unlabeled data. , $\varphi$ is the output of the encoder, W is the weight parameter of the network, and c is the center of the hypersphere calculated from the learning data. In [Equation 1], the first term is a calculation for unlabeled data, the second term is a calculation for labeled data, and the third term is a weighting element for normalization. As can be understood from the objective function, Deep SAD can utilize all data for learning, including normal data, small amounts of anomaly data, and unlabeled data. In anomaly detection using Deep SAD, the distance from the center c of the hypersphere shown in [Equation 2] below is calculated as the anomaly degree (score), and anomaly detection is performed by providing a threshold value for the anomaly degree.

## Equation 2

$$\text{score} = \|\phi(x_i; \mathcal{W}) - c\|^2$$

The anomaly degree (score) is small if it is normal, and large if it is anomaly. Therefore, if it is smaller than the set threshold value, it is judged to be normal, and if it is larger, it is judged to be anomaly.

As described above, in this embodiment, it is possible to perform semi-supervised anomaly detection learning to create an anomaly detection model and perform anomaly detection even with image data for model learning that have a small amount of anomaly data. Therefore, all of the normal data, the anomaly data, and data in which normal and anomaly data are not distinguished can be utilized, and the costs in model learning can be reduced. Since it is based on unsupervised learning that assumes the distribution of normal data, it is possible to separate normal data and anomaly data even if the data set is unbalanced between the normal data and the anomaly data. Therefore, effective learning can be performed on unbalanced data sets.

In the semi-supervised learning of this embodiment, data that were difficult to separate in unsupervised learning can be explicitly separated by the supervised learning part of semi-supervised learning. Therefore, it is possible to improve the accuracy of anomaly detection by utilizing a small amount of anomaly data. When performing model learning, by generating an index image that expresses image data in a one-hot manner, the search space can be kept small and learning processing and anomaly detection processing can be performed easily, thereby enabling stable processing. In addition, this embodiment can be effectively used during the transition period of data acquisition in actual operations, and by adding anomaly data acquired in actual operations to learning, an anomaly detection device can be improved to be more robust. Furthermore, it is possible to select any of unsupervised anomaly detection learning, semi-supervised anomaly detection learning, or supervised anomaly detection learning based on the amount of anomaly data in the data for anomaly detection model learning, so it is possible to select an optimal learning method according to the characteristics of data for model learning.

(Second Embodiment)

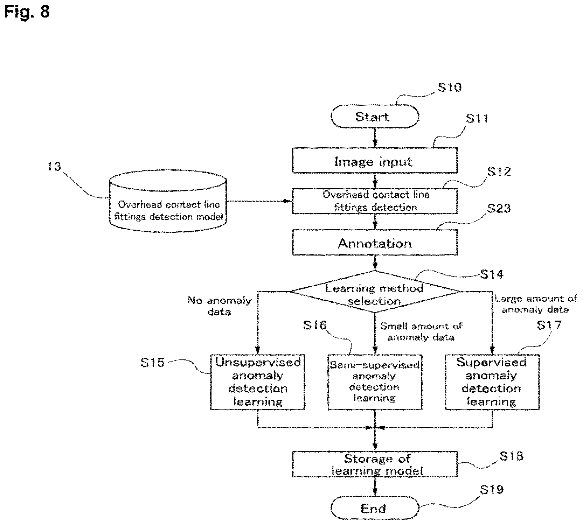

Fig. 8 is a flowchart illustrating learning processing of an anomaly detection model in the present embodiment. This embodiment differs from the first embodiment in that the process S13 of performing semantic segmentation in Fig. 6 is changed to a process S23 that uses the annotation image used when learning the segmentation model. Since similar processes are performed concerning the other processes, the same reference numbers are given and the explanations thereof are omitted. In addition to the same effects as those of the first embodiment, this embodiment supplies and uses an annotation image used previously to learn the segmentation model during model learning, so the step for learning processing can be shortened, and it is possible to efficiently learn the anomaly detection model.

**REFERENCE SIGNS LIST**

1      Device for detecting anomalies in overhead contact line fittings

3      Camera

5      Storage device

7      Data processing unit

9      Learning processing unit
       91 Overhead contact line fittings detection unit
       92 Segmentation unit
       93 Learning selection unit
       94 Unsupervised learning unit
       95 Semi-supervised learning unit
       96 Supervised learning unit

**Claims**

1. A device for detecting anomalies in overhead contact line fittings comprising:

   a camera that is mounted on the roof of a vehicle;
   a storage device that stores image data output from the camera;
   a learning processing unit that learns an anomaly detection model by semi-supervised anomaly detection learning using one-hot expression index image data that are obtained by converting the image data; and
   a data processing unit that performs anomaly determinations by using the anomaly detection model.

2. The device for detecting anomalies in overhead contact line fittings according to claim 1, wherein the learning processing unit comprises:

   an overhead contact line fittings detection unit that detects overhead contact line fittings from the image data;
   a segmentation unit that performs semantic segmentation on the image data of the detected overhead contact line fittings and that converts the image data into one-hot expression index image data;
   a learning selection unit that selects any of unsupervised anomaly detection learning, semi-supervised anomaly detection learning, and supervised anomaly detection learning on the basis of the amount of anomaly data in image data provided for model learning;
   an unsupervised learning unit that performs unsupervised anomaly detection learning;
   a semi-supervised learning unit that performs semi-supervised anomaly detection learning; and
   a supervised learning unit that performs supervised anomaly detection learning.

3. The device for detecting anomalies in overhead contact line fittings according to claim 2, wherein instead of performing the semantic segmentation by the segmentation unit, an annotation image used when learning a segmentation model for performing the semantic segmentation is used.

4. A method for detecting anomalies in overhead contact line fittings comprising:

   capturing images with a camera that is mounted on the roof of a vehicle;
   storing image data captured with the camera;
   learning an anomaly detection model by semi-supervised anomaly detection learning using one-hot expression index image data that are obtained by converting the image data; and
   performing anomaly determinations by using the anomaly detection model.

5. The method for detecting anomalies in overhead contact line fittings according to claim 4, wherein the learning content of the anomaly detection model comprises:

   detecting overhead contact line fittings from the image data;
   performing semantic segmentation on the image data of the detected overhead contact line fittings to convert the image data into one-hot expression index image data; and
   performing learning by selecting any of unsupervised anomaly detection learning, semi-supervised anomaly detection learning, and supervised anomaly detection learning on the basis of the amount of anomaly data in image data provided for model learning.

6. The method for detecting anomalies in overhead contact line fittings according to claim 5, wherein instead of performing the semantic segmentation, an annotation image is supplied that is used when learning a segmentation model for performing the semantic segmentation.

**Fig. 1**

Monitoring image example

**Fig. 2**

Data processing unit 71

Overhead contact line fittings detection unit

Segmentation unit 72

Anomaly detection unit 73

Learning processing unit 91 Overhead contact line fittings detection unit

Segmentation unit 92

Learning selection unit 93

Unsupervised learning unit 94

Semi-supervised learning unit 95

Supervised learning unit 96

Camera 3

Storage device 5

1

7

9

**Fig. 3**

Start — S01

Image input — S02

Image storage — S03

13 — Overhead contact line fittings detection model → Overhead contact line fittings detection — S04

15 — Segmentation model → Segmentation — S05

17 — Anomaly detection model → Anomaly detection — S06

S07 — Image capturing finished?  NO

YES

End — S08

**Fig. 4**

| 0 | 0 | 255 | 0 |
| 5 | 50 | 100 | 0 |
| 0 | 25 | 220 | 85 |
| 15 | 0 | 30 | 0 |

Height

Width

RGB

**Fig. 5**

**Fig. 6**

```
                                                      ┌──────────┐ ╭S10
                                                      │  Start   │╯
                                                      └────┬─────┘      ╭S11
                                                           ▼            │
                                                      ┌──────────────┐ ╯
                                                      │ Image input  │
                                                      └────┬─────────┘   ╭S12
   13                 ┌─────────────────┐                 ▼            ╱
    ╲      ┌──────────│ Overhead contact │──────►┌──────────────────┐╯
     ╲     │          │ line fittings    │       │ Overhead contact │
      ╲    │          │ detection model  │       │ line fittings    │      ╭S13
   15 ─────│          ├─────────────────┤        │ detection        │    ╱
          │          │  Segmentation   │──────► └────┬─────────────┘ ╯
          │          │     model       │              ▼
          └──────────┴─────────────────┘        ┌──────────────────┐
                                                │  Segmentation    │
                                                └────┬─────────────┘
                                                     ▼                 ╭S14
                                              ◇─────────────────◇    ╱
                           No anomaly        │ Learning method   │ ╯      Large amount of
                           data              │   selection       │         anomaly data
                            │                 ◇────────┬────────◇             │
                            │          ╭S16           │ Small amount of      │  ╭S17
                            ▼        ╱                 ▼ anomaly data         ▼ ╱
            S15  ┌──────────────┐  ┌──────────────┐  ┌──────────────┐
              ╲  │ Unsupervised │  │Semi-supervised│ │  Supervised  │
               ╲ │   anomaly    │  │   anomaly    │  │   anomaly    │
                 │  detection   │  │  detection   │  │  detection   │
                 │   learning   │  │   learning   │  │   learning   │
                 └──────┬───────┘  └──────┬───────┘  └──────┬───────┘
                        └─────────────────┼─────────────────┘
                                          ▼
                                   ┌──────────────┐
                                   │  Storage of  │         ╭S18
                                   │learning model│──────
                                   └──────┬───────┘         ╭S19
                                          ▼               ╱
                                   ┌──────────────┐     ╱
                                   │     End      │──
                                   └──────────────┘
```

**Fig. 7**

onehot  Encoder  Latent variable space

**Fig. 8**

13 — Overhead contact line fittings detection model

S10 — Start

S11 — Image input

S12 — Overhead contact line fittings detection

S23 — Annotation

S14 — Learning method selection

No anomaly data

Small amount of anomaly data

Large amount of anomaly data

S15 — Unsupervised anomaly detection learning

S16 — Semi-supervised anomaly detection learning

S17 — Supervised anomaly detection learning

S18 — Storage of learning model

S19 — End

## INTERNATIONAL SEARCH REPORT

International application No.

**PCT/JP2022/042799**

### A. CLASSIFICATION OF SUBJECT MATTER

***B61L 23/04***(2006.01)i; ***G01N 21/88***(2006.01)i; ***G06T 7/00***(2017.01)i
FI: B61L23/04; G06T7/00 610B; G01N21/88 J; G06T7/00 350B

According to International Patent Classification (IPC) or to both national classification and IPC

### B. FIELDS SEARCHED

Minimum documentation searched (classification system followed by classification symbols)

B61L23/04; G01N21/88; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-147129 A (MEIDENSHA ELECTRIC MFG CO LTD) 17 September 2020 (2020-09-17)<br>paragraphs [0002], [0027]-[0077], fig. 1-10 | 1, 4 |
| A | | 2-3, 5-6 |
| Y | JP 2020-42350 A (KYOCERA CORP) 19 March 2020 (2020-03-19)<br>paragraphs [0010]-[0022], fig. 1-3 | 1, 4 |
| Y | JP 2019-16209 A (TOSHIBA CORP) 31 January 2019 (2019-01-31)<br>paragraphs [0079]-[0082] | 1, 4 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/042799**

| Patent document cited in search report | | | Publication date (day/month/year) | Patent family member(s) | Publication date (day/month/year) |
|---|---|---|---|---|---|
| JP | 2020-147129 | A | 17 September 2020 | (Family: none) | |
| JP | 2020-42350 | A | 19 March 2020 | (Family: none) | |
| JP | 2019-16209 | A | 31 January 2019 | US 2019/0012553 A1 paragraphs [0099]-[0103] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019133306 A

**Non-patent literature cited in the description**

- **LUKAS RUFF ; ROBERT A. VANDERMEULEN ; NICO GORNITZ ; ALEXANDER BINDER ; EM-MANUEL MULLER ; KLAUS-ROBERT MULLER ; MARIUS KLOFT.** Deep Semi-Supervised Anomaly Detection. *International Conference on Learning Representations 2020(ICLR2020),* 2020